# EUROPÄISCHE PATENTSCHRIFT

(11) **EP 0 894 767 B1**
(45) Veröffentlichungstag und Bekanntmachung des Hinweises auf die Patenterteilung: **19.12.2007**
(21) Anmeldenummer: 98114072.6
(22) Anmeldetag: 28.07.1998
(51) Int. Cl.: C01B 37/00, C01B 37/02, C09C 1/40, A61K 9/52, A61K 47/02, C12N 11/14, B01J 21/04

(54) **Siliciumdioxid enthaltender Feststoff mit grosser Oberfläche**
Silicon oxide containing solid of high specific surface
Solide contenant de l'oxyde de silicium à grande surface spécifique

(30) Priorität: 30.07.1997 DE 19732865
(43) Veröffentlichungstag der Anmeldung: 03.02.1999
(73) Patentinhaber: BASF Aktiengesellschaft, 67056 Ludwigshafen (DE)
(72) Erfinder: Müller, Ulrich, Dr., 67434 Neustadt (DE); Steuerle, Ulrich, Dr., 69124 Heidelberg (DE)
(74) Vertreter: Isenbruck, Günter

(56) Entgegenhaltungen:
- EP-A- 0 015 132
- EP-A- 0 775 520
- EP-A- 0 814 059
- LE FEBRE R. A. ET AL: "Factors affecting the synthesis of zeolite Theta-1/Nu-10" ZEOLITES, Bd. 8, Nr. 1, Januar 1988, Seiten 60-67, XP002083982
- GUNAWARDANE R P ET AL: "LONG-CHAIN POLYAMINES AND AMINE-BORIC ACID PAIRS AS TEMPLATES FOR THE SYNTHESIS OF POROUS TECTOSILICATES" ZEOLITES MAR 1988, Bd. 8, Nr. 2, März 1988, Seiten 127-131, XP002084687
- CORMA A ET AL: "Synthesis and characterization of the MCM-22 zeolite" ZEOLITES;ZEOLITES JAN 1995 BUTTERWORTH-HEINEMANN LTD, OXFORD, ENGL, Bd. 15, Nr. 1, Januar 1995, Seiten 2-8, XP002084688

## Beschreibung

Die Erfindung betrifft einen Siliciumdioxid enthaltenden Feststoff mit großer spezifischer Oberfläche, ein Verfahren zur Herstellung desselben, sowie die Verwendung von Polyethyleniminen als Strukturbildner.

Die Herstellung von Siliciumdioxid enthaltenden Feststoffen, wie z.B. Kieselsäuren und Kieselgelen, ist an sich bekannt. Eine Übersicht der momentan technisch ausgeübten Verfahren wird in Ullmanns Enzykl. Techn. Chem., 4. Aufl., 1982, Bd. 21, Seiten 439 - 476 beschrieben.

Ein derart hergestelltes Siliciumdioxid hat eine spezifische Oberfläche im Bereich von 200 bis 800 m²/g bei Porendurchmessern von 8 bis 20 nm, wobei weitporige, Siliciumdioxid enthaltende Feststoffe tendenziell niedrigere Oberflächen besitzen. Die Porengröße ist bei derartigen weitporigen Siliciumdioxiden breit verteilt über einen Bereich von 5 bis 30 nm.

Aluminosilikate mit großer Oberfläche und enger Porengrößenverteilung vom Typ MCM-41 wurden von Kresge et al. in Nature, Bd. 359, S. 710 - 712 (1992) beschrieben, wobei jedoch die Porengröße auf einen Bereich von 2 bis 4 nm beschränkt ist. Dort wird die Verwendung von z.B. Cetyltrimethylammonium-Ionen als Porenbildner beschrieben und angegeben, daß die Porengröße durch Variation der langkettigen Alkylgruppe verändert werden kann.

Mesoporöse Oxide werden beispielsweise in der DE-A 44 07 326 und der DE-A 195 43 638 beschrieben. Gemäß dieser Druckschriften werden die mesoporösen Oxide dadurch hergestellt, daß man den Oxid-Vorläufern (Mono- oder Oligomere) während der Polykondensation auf dem Weg zum anorganischen Oxid ein kationisches, anionisches oder nichtionisches Tensid als strukturdirigierendes Reagenz zusetzt. Nach der eigentlichen Synthese werden gemäß dieser Druckschriften die Tenside als Strukturbildner thermisch entfernt, beispielsweise durch Brennen unter Luft bei 350 bis 600 °C, wobei ein mesoporöses, rein anorganisches Oxid erhalten wird.

Die Porengröße der gemäß dem Stand der Technik beschriebenen mesoporösen Oxide ist überwiegend auf den Bereich von ungefähr 2 bis ungefähr 6 nm begrenzt.

Für einige Anwendungen, wie z.B. die Verwendung als Adsorptionsmittel, sind jedoch preiswert herzustellende, Oxide enthaltende Feststoffe mit kleineren Poren wünschenswert, um starke Adsorptionskräfte aufbauen zu können und so hohe Reinheitsgrade des zu reinigenden Substrats nach der Verwendung des Oxids als Adsorptionsmittel zu erreichen. Dies wird bei kommerziell erhältlichen Siliciumdioxiden auch teilweise erreicht, jedoch weisen diese Siliciumdioxide eine breite Verteilung des Porendurchmessers auf und besitzen vergleichsweise niedrige spezifische Oberflächen.

In Anbetracht des obigen Standes der Technik liegt der vorliegenden Erfindung die Aufgabe zugrunde, einen Siliciumdioxid enthaltenden Feststoff, der sich für eine Vielzahl von Anwendungen, insbesondere zur Verwendung als Adsorptionsmittel eignet, sowie ein Verfahren zu dessen Herstellung bereitzustellen, mit dem es gelingt, den Siliciumdioxid enthaltenden Feststoff in wirtschaftlich günstiger Weise, d. h. preiswert, herzustellen.

Überraschenderweise wurde nun gefunden, daß diese Aufgabe dadurch gelöst werden kann, daß man bei der Herstellung des Siliciumdioxid enthaltenden Feststoffs einen Strukturbildner, der ein Polyethylenimin umfaßt, verwendet.

Diese Aufgabe wird gelöst durch ein Verfahren zur Herstellung eines amorphen, Siliciumdioxid enthaltenden Feststoffs, das die folgenden Stufen (I), (I') und (II) umfasst:
(I) Inkontaktbringen mindestens eines Vorläufers von Siliciumdioxid mit mindestens einem Strukturbildner in einem flüssigen Medium unter Erhalt einer Suspension, wobei der Strukturbildner ein Polyethylenimin oder ein Gemisch aus zwei oder mehr davon umfasst und wobei das flüssige Medium ein Gemisch aus Wasser und mindestens einem Alkohol ist;
(I') Temperieren der gemäß (I) erhaltenen Suspension auf eine Temperatur im Bereich von 10 bis 90 °C;
(II) Calcinieren des Siliciumdioxid enthaltenden Feststoffs.

Ferner stellt die vorliegende Erfindung auch einen amorphen, Siliciumdioxid enthaltenden Feststoff bereit, herstellbar durch ein Verfahren, das die folgenden Stufen (I), (I') und (II) umfasst:
(I) Inkontaktbringen mindestens eines Vorläufers von Siliciumdioxid mit mindestens einem Strukturbildner in einem flüssigen Medium unter Erhalt einer Suspension, wobei der Strukturbildner ein Polyethylenimin oder ein Gemisch aus zwei oder mehr davon umfasst und wobei das flüssige Medium ein Gemisch aus Wasser und mindestens einem Alkohol ist;
(I') Temperieren der gemäß (I) erhaltenen Suspension auf eine Temperatur im Bereich von 10 bis 90 °C;
(II) Calcinieren des Siliciumdioxid enthaltenden Feststoffs.

Fig. 1 zeigt eine transmissionselektronenmikroskopische Aufnahme des Feststoffs gemäß Beispiel 1.
Fig. 2 zeigt das Ergebnis der Stickstoff-Adsorption des Feststoffs gemäß Beispiel 1. Dabei bezeichnet p/p⁰ den Relativdruck, N₂^{ad} das Volumen an adsorbiertem Stickstoff pro Gramm Adsorptionsmittel. + steht für während der Adsorption, * für während der Desorption aufgenommene Meßwerte.

"Mikroporen" bezeichnen Poren mit einem Durchmesser von 2 nm oder weniger; "Mesoporen" bezeichnen Poren mit einem Durchmesser von 2 bis 50 nm; "Makroporen" bezeichnen Poren mit einem Durchmesser von 50 nm oder mehr.

Der Begriff "Strukturbildner" bezeichnet eine Substanz, die zunächst mit den Ausgangsmaterialien vermischt wird und anschließend, z.B. durch thermische Behandlung, aus dem resultierenden Feststoff entfernt wird, wobei die Bereiche, in denen sich der Strukturbildner befand, im Feststoff als Poren ausgebildet sind.

Wie bereits erwähnt, werden erfindungsgemäß Strukturbildner, die Polyethylenimine umfassen, verwendet. Polyethylenimine sind die Polymerisationsprodukte von Ethylenimin, wobei hier insbesondere die Homopolymerisate zu nennen sind. Die nach den bekannten, z.B. in Römpps Chemie Lexikon, 8.Aufl. 1992, S. 3532 - 3533 sowie in Ullmanns Enzyklopädie der techn. Chem., 4. Aufl. 1974, Bd. 8, S. 212 - 213 und der dort angegebenen Literatur beschriebenen Verfahren hergestellten Polyethylenimine besitzen Molekulargewichte im Bereich von ca. 450 bis 100000 g/mol. Dabei werden höhermolekulare Polymerisate durch Vernetzen mit polyfunktionellen Verbindungen, wie z.B. Diisocyanaten, erhalten.

In einer Ausführungsform wird ein Polyethylenimin oder ein Gemisch aus zwei oder mehr davon als Strukturbildner verwendet.

In einer weiteren Ausführungsform werden Polymerdispersionen eingesetzt, die vorzugsweise hauptsächlich, d.h. zu mehr als 50 Gew.-%, bezogen auf den Polymeranteil der Dispersion, aus Polyethylenimin bestehen.

Als Polymere, die neben Polyethylenimin in einer derartigen Dispersion vorhanden sind, eignen sich prinzipiell alle Polymere mit hydrophilen Eigenschaften, wie z. B. Poly(meth)acrylate, Polyethylenoxide, Polyester, Polyamide, Polyvinylalkohol, Polyvinylpyrrolidon sowie natürliche Polysaccharide, wie z. B. Stärke und Pectine und auch halbsynthetische Polymere, wie z. B. Celluloseether.

Beispielhaft zu nennen sind insbesondere Polyethylenoxid, Polymethylmethacrylat, Polymethylacrylat und Polyvinylalkohol.

Selbstverständlich können auch Gemische aus zwei oder mehr Polyethyleniminen und wahlweise weiteren Polymeren, wie oben definiert, als Strukturbildner verwendet werden.

Die Menge des eingesetzten, Polyethylenimin enthaltenden Strukturbildners unterliegt im allgemeinen keinen besonderen Beschränkungen. Sie beträgt vorzugsweise ungefähr 0,05 bis ungefähr 50 Gew.-%, weiter bevorzugt ungefähr 2 bis ungefähr 10 Gew.-%, jeweils bezogen auf den Syntheseansatz, d.h. die gesamte Menge an Vorläufer von Siliciumdioxid, Strukturbildner und flüssigem Medium.

Als flüssiges Medium werden beim erfindungsgemäßen Verfahren Gemische aus Wasser und mindestens einem Alkohol, wie z.B. Ethanol und/oder Isopropanol, verwendet.

Bevorzugt verwendet man Alkohole als Lösungsmittel, die aus der Hydrolyse der Siliciumdioxid-Vorläufer entstehen, d.h. z.B. Ethanol bei Verwendung von Tetraethylorthosilicat (Si(OEt)₄), i-Propanol bei Verwendung von Tetraisopropylorthosilicat und Butanol bei Verwendung von Tetrabutylorthosilicat.

Als Vorläufer von Siliciumdioxid können alle Verbindungen eingesetzt werden, die durch Calcinieren an der Luft bei erhöhten Temperaturen in Siliciumdioxid umgewandelt werden. Der Vorläufer kann dabei z.B. als metallorganische Komponente, wie z.B. als Alkoholat, als Grignard-Verbindung, als Alkylat, als Chelat mit z.B. Acetylacetonat als eine in einem organischen Lösungsmittel lösliche Form oder in Form löslicher Salze, als Hydroxid oder als Kolloid in wäßriger Phase, oder in einer Kombination aus zwei oder mehr davon, eingesetzt werden.

Das Inkontaktbringen kann sowohl im basischen, im sauren als auch im neutralen pH-Bereich durchgeführt werden, wobei jedoch der saure pH-Bereich, insbesondere ein pH-Wert von 1 bis 5, bevorzugt ist.

Nach dem Zusammengeben des Vorläufers von Siliciumdioxid und dem Strukturbildner in einem flüssigen Medium wird die entstehende Suspension auf den geeigneten pH-Wert gebracht und ungefähr 0,5 bis ungefähr 72, vorzugsweise ungefähr 1 bis ungefähr 48 und insbesondere ungefähr 10 bis ungefähr 30 Stunden lang bei einer Temperatur im Bereich von 10 bis 90 °C und insbesondere ungefähr 20 bis ungefähr 65 °C gerührt. Der Druck während des Inkontaktbringens der oben beschriebenen Komponenten beträgt vorzugsweise ungefähr 0,4 bis ungefähr 300 bar, weiter bevorzugt ungefähr 0,8 bis 150 bar und insbesondere ungefähr 1 bis ungefähr 10 bar.

Anschließend wird die entstehende Suspension vom flüssigen Medium abgetrennt, beispielsweise durch Zentrifugation oder einfaches Abfiltrieren und anschließend getrocknet. Bei der Trocknung wird vorzugsweise so vorgegangen, daß zunächst ungefähr 5 bis ungefähr 72 Stunden, vorzugsweise ungefähr 10 bis ungefähr 48 Stunden und insbesondere ungefähr 20 bis ungefähr 30 Stunden bei Umgebungstemperatur getrocknet und anschließend bei erhöhter Temperatur in einem Bereich von ungefähr 50 bis ungefähr 100 °C, vorzugsweise ungefähr 55 bis ungefähr 70 °C über mehrere Stunden hinweg nachgetrocknet wird.

Der so getrocknete, Siliciumdioxid enthaltende Feststoff wird anschließend bei ungefähr 350 bis ungefähr 800 °C, vorzugsweise ungefähr 400 bis ungefähr 700 °C und insbesondere bei ungefähr 450 bis ungefähr 600 °C ungefähr 2 bis ungefähr 10, vorzugsweise ungefähr 4 bis ungefähr 6 Stunden lang in Anwesenheit von Sauerstoff, vorzugsweise unter Luft, calciniert.

Während des Inkontaktbringens des Vorläufers von Siliciumdioxid mit dem Strukturbildner können noch folgende weitere Bestandteile zugesetzt werden:
- Pharmakologisch wirksame organische oder anorganische Verbindungen, wie z.B. Schmerzmittel oder Herz-Kreislaufmittel, wobei der Einbau dieser Verbindungen in den Siliciumdioxid enthaltenden Feststoff eine retardierte Freigabe der pharmakologisch wirksamen Verbindung bei der Applikation mit sich bringt;
- Enzyme für biotechnologische Anwendung, wie z.B. Oxidasen, Reduktasen, Transferasen, Hydrolasen, Lyasen, Isomerasen, Ligasen sowie semisynthetische und künstliche Enzyme, wie sie beispielsweise in "Science, 223 (1984) S. 165ff" bzw. in "Cold Spring Harbor Symp. Quant Biol. 52 (1987), S. 75 - 81" und "Tetrahedron 40 (1994), S. 269 - 292" beschrieben sind.
- Pigmente, wie z.B. ferromagnetische Pigmente, wie z. B. Chrom(IV)-dioxid, Ferrite, Eisenoxide, Eisen oder Eisenlegierungen, weitere anorganische Pigmente, wie z. B. Kreide, Graphit, Titan-, Blei- oder Zinkweiß, Ruß, Leuchtpigmente, wie z. B. Zinksulfid oder Erdalkalimetallaluminate, organische Pigmente, wie z. B. Azo-Pigmente, Indigoide-, Phthalocyanin-, Metallkomplex- oder Diketopyrrolopyrrol-Pigmente, die dann ebenfalls im erhaltenen, Siliciumdioxid enthaltenden Festkörper verkapselt vorliegen.

Ferner können, insbesondere über die wäßrige Phase, bei der Herstellung des erfindungsgemäßen, Siliciumdioxid enthaltenden Feststoffs noch eine ionische Verbindung eines Elements der ersten bis dritten Hauptgruppe oder der ersten bis achten Nebengruppe des Periodensystems, der Lanthanoiden, Germanium, Zinn, Blei, Phosphor, Antimon, Wismut, Schwefel, Selen, Tellur oder ein Gemisch aus zwei oder mehr davon, vorzugsweise Natrium, Kalium, Calcium, Magnesium, Beryllium, Bor, Aluminium, Gallium, Indium, Germanium, Zinn, Blei, Antimon, Wismut, Scandium, Yttrium, Lanthan, Titan, Zirkonium, Hafnium, Vanadium, Niob, Tantal, Chrom, Molybdän, Wolfram, Mangan, Rhenium, Eisen, Cobalt, Nickel, Ruthenium, Kupfer, Zink, Cadmium, Quecksilber, Cer, Europium, Thorium, Uran oder ein Gemisch aus zwei oder mehr davon, weiter bevorzugt Natrium, Kalium, Calcium, Magnesium, Beryllium, Bor, Aluminium, Gallium, Indium, Germanium, Zinn, Blei, Wismut, Titan, Zirkonium, Hafnium, Vanadium, Niob, Tantal, Chrom, Molybdän, Wolfram, Mangan, Rhenium, Eisen, Cobalt, Nickel, Ruthenium, Kupfer, Zink, Cadmium, Quecksilber, Cer oder ein Gemisch aus zwei oder mehr davon zugesetzt werden.

Die oben genannten Elemente können insbesondere in Form ihrer Sulfate, Phosphate, Nitrate, Carbonate, Halogenide und Perchlorate sowie leicht hydrolysierbarer metallorganischer Verbindungen, wie z.B. Alkoholaten, Chelaten, Carboxylaten, vorzugsweise in Form von Sulfaten, Phosphaten und Nitraten, weiter bevorzugt in Form von Sulfaten und Nitraten eingesetzt werden.

Ferner können sie auch in Form von Isopoly- oder Heteropolykationen eingesetzt werden, wie dies in den eingangs erwähnten Druckschriften DE-A 44 07 326 und der DE-A 195 43 638 beschrieben wird.

Gemäß einer weiteren Ausführungsform der vorliegenden Erfindung kann das Gemisch aus dem Vorläufer von Siliciumdioxid, dem Strukturbildner und dem flüssigen Medium auf einen inerten porösen Träger aufgebracht werden, wie z.B. ein poröses Glas, ein Aluminiumoxid, Diatomenerde oder Tonerde, eine Keramik, ein Metall, eine Metallpackung oder auch ein Metallnetz, wie sie beispielsweise für statische Mischer oder Packungen in Kolonnen zur Reaktivdestillation eingesetzt werden. Dadurch besteht die Möglichkeit, im Rahmen des erfindungsgemäßen Verfahrens mit einem Siliciumdioxid enthaltenden Feststoff belegte oder imprägnierte inerte Träger herzustellen, wobei Verbundmaterialien entstehen, die gegenüber den Ausgangsmaterialien eine verbesserte mechanische Stabilität und verbesserte Durchströmbarkeit im Reaktor für die katalytische Umsetzung aufweisen.

Dabei sind insbesondere metallische Trägermaterialien, wie beispielsweise die Edelstähle mit Werkstoffnummern 1.4767, 1.4401, 2.4610, 1.4765, 1.4847, 1.4301 usw. zu nennen, da sie vor der Belegung/Imprägnierung mit den Feststoffen durch eine Temperung eine Aufrauhung ihrer Oberfläche erhalten können. Insbesondere bevorzugt werden als Netzmaterial Kanthal (Werkstoffnr. 1.4767) bzw. Metalle, die Aluminium enthalten, eingesetzt. Kanthal ist eine Legierung, die ungefähr 75 Gew.-% Fe, ungefähr 20 Gew.-% Cr und ungefähr 5 Gew.-% Al enthält. Für die Temperung werden die oben erwähnten metallischen Träger bei Temperaturen von 600 bis 1100, vorzugsweise 800 bis 1000°C, eine bis zwanzig, vorzugsweise eine bis zehn Stunden an der Luft erhitzt und wieder abgekühlt. Diese Vorbehandlung ist in der EP-A-0 564 830 beschrieben und wichtig, da diese Temperungsbehandlung die Verbindung der Feststoffe mit den metallischen Träger signifikant verbessert.

Führt man das Inkontaktbringen an einer ruhenden Grenzfläche, d. h. an einer Grenzfläche zweier nicht mischbarer Flüssigkeiten, durch, so kann der Siliciumdioxid enthaltende Feststoff in Form dünner Filme oder Schichten isoliert werden, da es in Anwesenheit einer derartigen Grenzfläche möglich ist, den Feststoff bei der Herstellung in eine bestimmte gerichtete Struktur, wie z. B. einen dünnen Film, zu bringen. Weitere Details sind der DE-A 196 24 862 zu entnehmen. Die so erhaltenen dünnen Filme oder Schichten können in Membran-, Trenn- und Reinigungsverfahren eingesetzt oder auch zur Informationsspeicherung genutzt werden. Derartige Anwendungen sind beispielsweise in der DE-A 44 24 221 beschrieben.

Derartige Festkörper können insbesondere für elektronische, optische oder elektrooptische Einsatzgebiete genutzt werden, die entsprechenden Membranen finden Verwendung in der katalytischen Umsetzung in Membranreaktoren oder bei Reaktivdestillationen. Demgemäß betrifft die vorliegende Erfindung auch die Verwendung des erfindungsgemäßen Feststoffs bzw. eines Feststoffs, der mittels des erfindungsgemäßen Verfahrens hergestellt wird, als Katalysator oder Katalysatorträger, als Matrix für Aktivkomponenten, in Membran-, Trenn- oder Reinigungsverfahren, zur Herstellung von elektrischen, optischen oder elektrooptischen Bauelementen, wie z. B. Schaltelementen oder Sensoren, zur Herstellung von Oxidkeramiken oder zur Stofftrennung, als Adsorptionsmittel, als Füllstoff, insbesondere in Polymeren und als Flammschutzmittel, und als Schleif- und Poliermittel.

Sofern der erfindungsgemäße oder erfindungsgemäß hergestellte Feststoff als Adsorptionsmittel verwendet wird, kann er sowohl in Festbett-, Wanderbettals auch Wirbelschichtverfahren eingesetzt werden, wobei der Feststoff stets mit dem zu behandelnden Ausgangsmaterial in Kontakt gebracht wird.

Im einzelnen sind folgende Prozesse beispielhaft zu nennen:

Trennung von Kohlenwasserstoffen mit unterschiedlicher Anzahl an C-Atomen und von verschiedenen Kohlenwasserstoff-Isomeren (Trennung von z.B. n- und iso-Isomer); Abtrennung von Wasserstoff aus Wasserstoff enthaltenden Gasen, wie z.B. H₂ aus Reformergas, aus Raffineriegas oder aus NH₃-Synthesegas; Auftrennung von Luft (N₂/O₂-Trennung); Anreicherung von Ozon, wie z.B. mittels des Sorbozon- oder des Linde-Ozon-Verfahrens; Abtrennung von Methan aus Gasgemischen, die Methan enthalten, wie z.B. Grubengas; Verfahren zur Entschwefelung, wie z.B. die Entschwefelung von Claus-Prozeß-Abgasen, Rauchgasen oder Abgasen chemischer oder metallurgischer Prozesse, oder zur Simultanabscheidung von Schwefeldioxid und Stickoxiden, und Verfahren zur Gastrocknung durch Adsorption.

Weitere Verfahren zur Adsorption, in denen der erfindungsgemäße bzw. erfindungsgemäß hergestellte Feststoff verwendet werden kann, sowie Details der oben beschriebenen Verfahren lassen sich aus der Literatur gemäß W. Kast "Adsorption aus der Gasphase", VCH-Verlag 1988, insbesondere S. 213 - 273, und der darin zitierten Literatur entnehmen.

Sofern der erfindungsgemäße oder erfindungsgemäß hergestellte Feststoff als Katalysator oder Katalysatorträger eingesetzt wird, findet er insbesondere Verwendung in der Oxyfunktionalisierung von Kohlenwasserstoffen, der Oxidation von Olefinen zu Oxiranen, der Alkylierung von Aromaten, der Hydrierung, Dehydrierung, Hydratisierung, Dehydratisierung, Isomerisierung, einer Additionsreaktion, einer Eliminierungsreaktion, der nucleophilen und elektrophilen Substitution, Dehydrocyclisierung, Hydroxylierung von Heteroaromaten, Hydroxylierung von Aromaten, Epoxid-Aldehyd-Umlagerung, Aminierung eines monomeren oder oligomeren Olefins, einer Kondensationsreaktion vom Aldoltyp, einer Polymerisationsreaktion, Veresterung und Veretherung, der katalytischen Umsetzung von Ab- und Rauchgasen sowie zur Stickoxidentfernung, wobei jeweils das umzusetzende Edukt mit dem Siliciumdioxid enthaltenden Feststoff in der Gas- oder Flüssigphase in Suspensions-, Wirbelbett- oder Festbettfahrweise in Kontakt gebracht wird.

Der erfindungsgemäße Feststoff weist insbesondere folgende Eigenschaften auf:
- Er zeigt in der röntgenographischen Analyse intensive Reflexe im Winkelbereich 2 bis 4° (2 Θ) bei der Bestimmung mit Cu-K_{α}-Strahlung.
- Der Feststoff weist Mikroporen, insbesondere Poren im Bereich von kleiner 2 und größer 5 nm, vorzugsweise kleiner 2 und größer 10 nm und weiter bevorzugt kleiner 2 und größer 20 nm auf, wobei der Porendurchmesser mittels Stickstoffadsorption bei 77 K ermittelt wird. Die bei gleichen Bedingungen gemessene spezifische Oberfläche nach Langmuir liegt oberhalb von ungefähr 500 m²/g, vorzugsweise oberhalb 600 m²/g und insbesondere bei ungefähr 700 bis 1500 m²/g.
- Das ebenfalls mittels Stickstoffadsorption bei 77 K ermittelte Porenvolumen liegt oberhalb von ungefähr 0,15 ml/g, vorzugsweise bei ungefähr 0,5 ml/g oder darüber und insbesondere bei ungefähr 0,5 ml/g bis 1,0 ml/g.

Ferner betrifft die vorliegende Erfindung die Verwendung eines Polyethylenimins oder eines Gemischs aus zwei oder mehr davon als Strukturbildner bei der Herstellung eines Siliciumdioxid enthaltenen Feststoffs.

Die nachfolgenden Beispiele sollen Herstellung und Eigenschaften des erfindungsgemäßen Feststoffs näher erläutern und in Bezug setzen zu einem Vergleichsbeispiel, das gemäß einem Verfahren des Standes der Technik, d.h. ohne Zusatz eines Polyethylenimins, hergestellt wurde.

### BEISPIELE

### Beispiel 1

In einem 2 l Vierhalskolben wurde eine Lösung aus 209 g Tetraethylorthosilicat, 150 g Ethanol und 61,0 g Isopropanol hergestellt und 30 min homogenisiert. Danach gab man eine Lösung aus 50,0 g Polyethylenimin (Polymin wasserklar, BASF) in 150 g Ethanol zu.

Anschließend wurde eine Lösung aus 650,0 g deionisiertem Wasser und 7,5 g einer Salzsäurelösung (10 Gew.-%) zugegeben, wobei sich eine Suspension bildete. Die Suspension wurde 24 h lang bei Raumtemperatur gerührt und anschließend abfiltriert. Danach wurde der erhaltene Feststoff über Nacht bei 120 °C getrocknet. Die Auswaage betrug 111,4 g Feststoff. Abschließend wurde der Feststoff bei 500 °C 5 Stunden lang unter Luft calciniert. Der Calcinierungsverlust betrug 47 Gew.-%, bezogen auf den eingesetzten Feststoff.

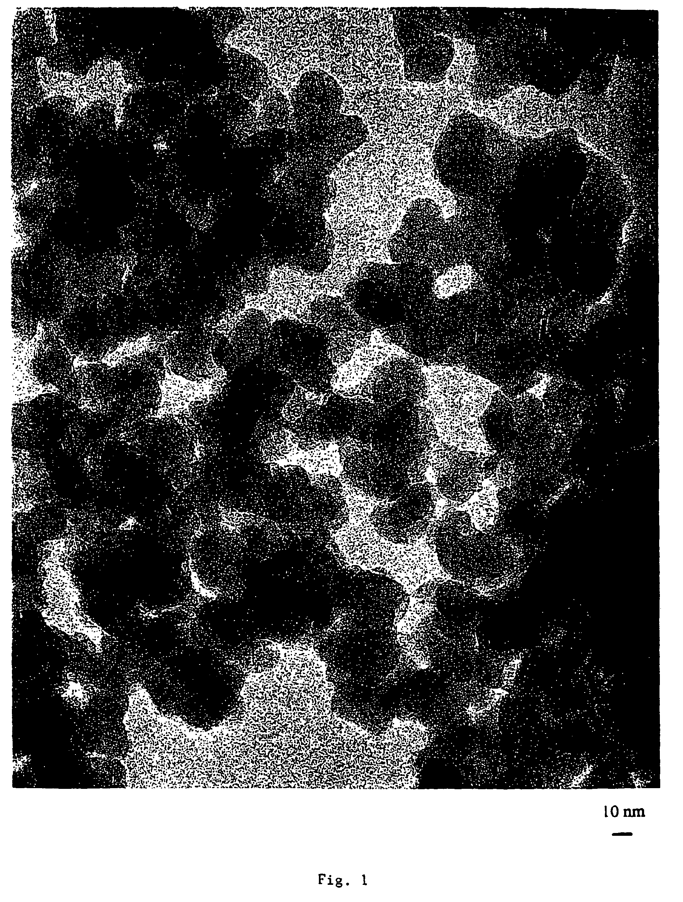

Die transmissionselektronenmikroskopische Aufnahme gemäß Fig. 1 des so hergestellten Feststoffs zeigt eine regelmäßige Strukturierung des entstandenen SiO₂ in Form agglomerierter Kugeln mit einem Durchmesser von 10 bis 30 nm.

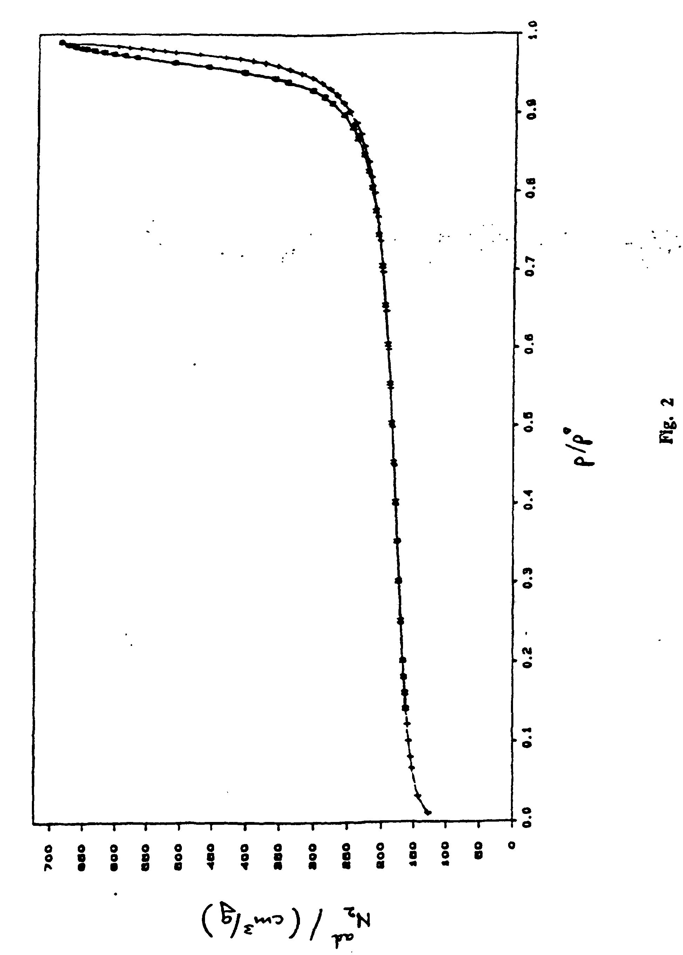

Mittels Stickstoffadsorption bei 77 K fand man die in Fig. 2 gezeigte typische Hysterese im Relativdruckbereich von p/p° von 0,98. Die nach Langmuir berechnete Oberfläche betrug 764 m²/g. Das entsprechende Mikroporenvolumen betrug 0,20 ml/g. Unter Verwendung des Barret-Joyner-Halenda (BJH)-Modells (s. J. Am. Chem. Soc., 73 (1951), S. 373 - 380) ließen sich aus der Hysterese Poren im Bereich von 10 bis 100 nm mit einem mittleren Durchmesser von 20 nm und einem Gesamtporenvolumen von 0,82 ml/g berechnen.

Röntgenographisch zeigte der so erhaltene Feststoff einen amorphen Halo im Bereich von 15 bis 35° (2 Θ), sowie einen breiten Peak bei ca. 2,7° (2 Θ) (Cu-K_{α}-Strahlung), entsprechend einem d-Wert von ca. 2,7 nm.

### Vereleichsbeispiel 1

In einem 2 l Vierhalskolben wurde eine Lösung aus 209 g Tetraethylorthosilicat, 300 g Ethanol und 61,0 g Isopropanol hergestellt und 30 min homogenisiert. Danach gab man eine Lösung aus 650,0 g Wasser und 7,5 g der Salzsäurelösung (10 Gew.-%) zu, wobei sich eine Suspension bildete. Die Suspension wurde 24 h lang bei Raumtemperatur gerührt und anschließend abfiltriert. Anschließend wurde der erhaltene Feststoff über Nacht an der Luft bei 120 °C getrocknet. Die Auswaage betrug 31 g. Der Feststoff wurde anschließend bei 500 °C 5 Stunden lang calciniert. Der Calcinierungsverlust betrug 12 Gew.-%.

Mittels Stickstoffadsorption bei 77 K fand man nach langer Meßzeit eine Langmuir-Oberfläche von 30 m²/g. Das entsprechende Porenvolumen betrug lediglich 0,013 ml/g, gemessen bei einem Relativdruck von p/p° von 0,98.

## Patentansprüche

1. Verfahren zur Herstellung eines amorphen, Siliciumdioxid enthaltenden Feststoffs, das die folgenden Stufen (I), (I') und (II) umfasst:
(I) Inkontaktbringen mindestens eines Vorläufers von Siliciumdioxid mit mindestens einem Strukturbildner in einem flüssigen Medium unter Erhalt einer Suspension, wobei der Strukturbildner ein Polyethylenimin oder ein Gemisch aus zwei oder mehr davon umfasst und wobei das flüssige Medium ein Gemisch aus Wasser und mindestens einem Alkohol ist;
(I') Temperieren der gemäß (I) erhaltenen Suspension auf eine Temperatur im Bereich von 10 bis 90 °C;
(II) Calcinieren des Siliciumdioxid enthaltenden Feststoffs.

2. Verfahren nach Anspruch 1, **dadurch gekennzeichnet, dass** der Strukturbildner ein Polyethylenimin oder ein Gemisch aus zwei oder mehr davon oder eine Polymerdispersion, die ein Polyethylenimin oder ein Gemisch aus zwei oder mehr davon enthält, ist.

3. Verfahren nach Anspruch 1 oder 2, **dadurch gekennzeichnet, dass** der Siliciumdioxid enthaltende Feststoff mindestens ein Element, ausgewählt aus der Gruppe bestehend aus Natrium, Kalium, Calcium, Magnesium, Beryllium, Bor, Aluminium, Gallium, Indium, Germanium, Zinn, Blei, Wismut, Titan, Zirkonium, Hafnium, Vanadium, Niob, Tantal, Chrom, Molybdän, Wolfram, Mangan, Rhenium, Eisen, Cobalt, Nickel, Ruthenium, Kupfer, Zink, Cadmium, Quecksilber und Cer, enthält.

4. Verfahren nach einem der Ansprüche 1 bis 3, **dadurch gekennzeichnet, dass** der Vorläufer zusätzlich mit einer pharmakologisch wirksamen organischen oder anorganischen Verbindung, einem Enzym, einem Pigment oder einem Gemisch aus zwei oder mehr davon in Kontakt gebracht wird.

5. Verfahren nach einem der Ansprüche 1 bis 4, **dadurch gekennzeichnet, dass** das Inkontaktbringen in Gegenwart eines inerten porösen Trägers oder an einer ruhenden Grenzfläche durchgeführt wird.

6. Amorpher, Siliciumdioxid enthaltender Feststoff, herstellbar durch ein Verfahren, das die folgenden Stufen (I), (I') und (II) umfasst:
(I) Inkontaktbringen mindestens eines Vorläufers von Siliciumdioxid mit mindestens einem Strukturbildner in einem flüssigen Medium unter Erhalt einer Suspension, wobei der Strukturbildner ein Polyethylenimin oder ein Gemisch aus zwei oder mehr davon umfasst und wobei das flüssige Medium ein Gemisch aus Wasser und mindestens einem Alkohol ist;
(I') Temperieren der gemäß (I) erhaltenen Suspension auf eine Temperatur im Bereich von 10 bis 90 °C;
(II) Calcinieren des Siliciumdioxid enthaltenden Feststoffs.

7. Verwendung eines Feststoffs gemäß Anspruch 6 oder eines mittels eines Verfahrens gemäß einem der Ansprüche 1 bis 5 hergestellten Feststoffs als Katalysator oder Katalysatorträger, als Matrix für Aktivkomponenten, in Membran-, Trenn- oder Reinigungsverfahren, zur Herstellung von elektrischen, optischen oder elektrooptischen Bauelementen, zur Herstellung von Oxidkeramiken oder zur Stofftrennung, als Adsorptionsmittel, als Füllstoff und als Flammschutzmittel und als Schleif- und Poliermittel.

8. Verwendung nach Anspruch 7, wobei der Feststoff als Katalysator oder Katalysatorträger bei der Oxyfunktionalisierung von Kohlenwasserstoffen, der Oxidation von Olefinen zu Oxiranen, der Alkylierung von Aromaten, der Hydrierung, Dehydrierung, Hydratisierung, Dehydratisierung, Isomerisierung, einer Additionsreaktion, einer Eliminierungsreaktion, einer nucleophilen und elektrophilen Substitution, einer Dehydrocyclisierung, Hydroxilierung von Heteroaromaten, Hydroxilierung von Aromaten, Epoxid-Aldehyd-Umlagerung, Aminierung eines monomeren oder oligomeren Olefins, einer Kondensationsreaktion von Aldoltyp, einer Polymerisationsreaktion, einer Veresterung und Veretherung, der katalytischen Umsetzung von Ab- und Rauchgasen sowie zur Stickoxidentfernung verwendet wird.

9. Verwendung nach Anspruch 7, wobei der Feststoff als Adsorptionsmittel bei der Trennung von Kohlenwasserstoffen, der Abtrennung von Wasserstoff aus Wasserstoff enthaltenden Gasen, der Auftrennung von Luft, der Anreicherung von Ozon, der Abtrennung von Methan aus methanhaltigen Gasgemischen, bei der Entschwefelung von Gasen, bei der Simultanabscheidung von Schwefeldioxid und Stickoxiden, und der Gastrocknung eingesetzt wird.

## Claims

1. A process for preparing an amorphous silica solid, which comprises the following steps (I), (I') and (II) of :
(I) contacting in a liquid medium at least one silica precursor with at least one template to obtain a suspension, the template comprising a polyethyleneimine or a mixture of two or more thereof and the liquid medium being a mixture of water and at least one alcohol;
(I') bringing the suspension obtained according to (I) to a temperature in the range from 10 to 90°C;
(II) calcining the silica solid.

2. The process according to claim 1, wherein the template is a polyethyleneimine or a mixture of two or more thereof or a polymer dispersion comprising a polyethyleneimine or a mixture of two or more thereof.

3. The process according to claim 1 or 2, wherein the silica solid comprises at least one element selected from the group consisting of sodium, potassium, calcium, magnesium, beryllium, boron, aluminum, gallium, indium, germanium, tin, lead, bismuth, titanium, zirconium, hafnium, vanadium, niobium, tantalum, chromium, molybdenum, tungsten, manganese, rhenium, iron, cobalt, nickel, ruthenium, copper, zinc, cadmium, mercury and cerium.

4. The process according to any of claims 1 to 3, wherein the precursor is additionally contacted with a pharmacologically active organic or inorganic compound, an enzyme, a pigment or a mixture of two or more thereof.

5. The process according to any of claims 1 to 4, wherein the contacting is carried out in the presence of an inert porous support or at a stationary interface.

6. An amorphous silica solid obtainable by a process comprising the following steps (I), (I') and (II) of :
(I) contacting in a liquid medium at least one silica precursor with at least one template to obtain a suspension, the template comprising a polyethyleneimine or a mixture of two or more thereof and the liquid medium being a mixture of water and at least one alcohol;
(I') bringing the suspension obtained according to (I) to a temperature in the range from 10 to 90°C;
(II) calcining the silica solid.

7. The use of a solid according to claim 6 or prepared by a process according to any of claims 1 to 5 as catalyst or catalyst support, as matrix for active components, in membrane, separation or purification processes, for producing electrical, optical or electro-optic components, for producing oxide ceramics or for separating substances, as adsorbent, as filler, as fire retardant and as abrasives and polishing materials.

8. The use according to claim 7, where the solid is used as catalyst or catalyst support in hydrocarbonoxyfunctionalization, olefin oxidation to give oxiranes, aromatics alkylation, hydrogenation, dehydrogenation, hydration, dehydration, isomerization, an addition reaction, an elimination reaction, a nucleophilic or electrophilic substitution, a dehydrocyclization, hydroxylation of heteroatoms, aromatics hydroxylation, epoxyaldehyde rearrangement, amination of monomeric or oligomeric olefins, an aldol type condensation reaction, a polymerization reaction, an esterification or etherification, the catalytic conversion of exhaust gases and flue gases or for nitrogen oxide removal.

9. The use according to claim 7, where the solid is used as adsorbent in hydrocarbon separation, removal of hydrogen from hydrogen-comprising gases, air fractionation, ozone enrichment, removal of methane from methane-comprising gas mixtures, gas desulfurization, simultaneous removal of sulfur dioxide and nitrogen oxides and gas drying.

## Revendications

1. Procédé de préparation d'un solide amorphe contenant du dioxyde de silicium, qui comprend les étapes suivantes (I), (I') et (II) :
(I) mise en contact d'au moins un précurseur du dioxyde de silicium avec au moins un formateur de structure dans un milieu liquide avec obtention d'une suspension, le formateur de structure comprenant une polyéthylène imine ou un mélange de deux de celles-ci ou plus, et le milieu liquide étant un mélange d'eau et d'au moins un alcool;
(I')mise à température de la suspension obtenue en (I) à une température dans l'intervalle compris entre 10 et 90°C;
(II) calcination du solide contenant le dioxyde de silicium.

2. Procédé selon la revendication 1, **caractérisé en ce que** le formateur de structure est une polyéthylène imine ou un mélange de deux de celles-ci ou plus ou une dispersion polymère qui contient une polyéthylène imine ou un mélange de deux de celles-ci ou plus.

3. Procédé selon la revendication 1 ou 2, **caractérisé en ce que** le solide contenant du dioxyde de silicium contient au moins un élément sélectionné parmi le groupe composé des sodium, potassium, calcium, magnésium, béryllium, bore, aluminium, gallium, indium, germanium, étain, plomb, bismuth, titane, zirconium, hafnium, vanadium, niobium, tantale, chrome, molybdène, wolfram, manganèse, rhénium, fer, cobalt, nickel, ruthénium, cuivre, zinc, cadmium, mercure et cérium.

4. Procédé selon l'une des revendications 1 à 3, **caractérisé en ce que** le précurseur est de plus mis en contact avec un composé efficace sur le plan pharmacologique et organique ou inorganique, une enzyme, un pigment ou un mélange de deux de ceux-ci ou plus.

5. Procédé selon l'une des revendications 1 à 4, **caractérisé en ce que** la mise en contact se fait en présence d'un support inerte poreux ou sur une interface au repos.

6. Solide amorphe contenant du dioxyde de silicium que l'on peut préparer par un procédé qui comprend les étapes suivantes (I), (I') et (II) :
(I) mise en contact d'au moins un précurseur de dioxyde de silicium avec au moins un formateur de structure dans un milieu liquide avec obtention d'une suspension, le formateur de structure comprenant une polyéthylène imine ou un mélange de deux de celles-ci ou plus, et le milieu liquide étant un mélange d'eau et d'au moins un alcool;
(I')mise à température de la suspension obtenue en (I) à une température dans l'intervalle compris entre 10 et 90°C;
(II) calcination du solide contenant le dioxyde de silicium.

7. Utilisation d'un solide selon la revendication 6 ou d'un solide fabriqué selon le procédé d'une des revendications 1 à 5 comme catalyseur ou support de catalyseur, comme matrice pour composants actifs dans des procédés à membrane, à séparation ou de purification, pour la fabrication d'éléments de construction électriques, optiques ou électrooptiques, pour la fabrication de céramiques d'oxyde ou pour la séparation des matières, comme produit d'adsorption, comme charge, comme ignifugeant et comme produit abrasif et de polissage.

8. Utilisation selon la revendication 7, dans laquelle le solide est utilisé comme catalyseur ou support de catalyseur, lors de la fonctionnalisation oxy des hydrocarbures, de l'oxydation d'oléfines en oxiranes, de l'alkylation d'aromatiques, de l'hydrogénation, de la déshydrogénation, de l'hydratation, de la déshydratation, de l'isomérisation, d'une réaction d'addition, d'une réaction d'élimination, d'une substitution nucléophile et électrophile, d'une déshydrocyclisation, d'une hydroxylilation d'hétéroaromatiques, d'une hydroxylilation d'aromatiques, d'une transposition époxydealdéhyde, d'une amination d'une oléfine monomère ou oligomère, d'une réaction de condensation d'aldotype, d'une réaction de polymérisation, d'une estérification et d'une éthérification, de la transformation catalytique de gaz d'échappement et de fumée ainsi que pour l'élimination d'oxyde azotique.

9. Utilisation selon la revendication 7, dans laquelle le solide est mis en oeuvre comme produit d'adsorption lors de la séparation des hydrocarbures, de la séparation de l'hydrogène hors de gaz hydrogénés, de la séparation de l'air, de l'enrichissement de l'ozone, de la séparation du méthane hors de mélanges gazeux contenant du méthane, lors de la désulfuration de gaz, lors du dépôt simultané du dioxyde de soufre et d'oxydes azotiques et du séchage de gaz.
